# EUROPÄISCHE PATENTSCHRIFT

(11) **EP 1 649 253 B1**
(45) Veröffentlichungstag und Bekanntmachung des Hinweises auf die Patenterteilung: **17.01.2007**
(21) Anmeldenummer: 04740629.3
(22) Anmeldetag: 04.07.2004
(51) Int. Cl.: G01G 11/08

(54) **VERFAHREN UND VORRICHTUNG ZUR KONTINUIERLICHEN, GRAVIMETRISCHEN DOSIERUNG VON FLIESSFÄHIGEN GÜTERN FÜR FEUERUNGSANLAGEN**
METHOD AND DEVICE FOR THE CONTINUOUS GRAVIMETRIC METERING OF FLOWING MATERIALS FOR BURNER SYSTEMS
PROCEDE ET DISPOSITIF DE DOSAGE GRAVIMETRIQUE EN CONTINU DE MATIERES FLUIDES POUR INSTALLATIONS DE CHAUFFAGE

(30) Priorität: 04.07.2003 DE 10330376
(43) Veröffentlichungstag der Anmeldung: 26.04.2006
(73) Patentinhaber: Pfister GmbH, 86165 Augsburg (DE)
(72) Erfinder: WOLFSCHAFFNER, Hubert, 86453 Dasing (DE)
(74) Vertreter: Fiener, Josef
(86) Internationale Anmeldenummer: PCT/EP2004/007289
(87) Internationale Veröffentlichungsnummer: WO 2005/003696

(56) Entgegenhaltungen:
- WO-A-01/61285
- DE-A- 4 443 053
- US-A- 3 412 699
- US-A- 4 915 306
- US-A1- 2002 078 868

## Beschreibung

Die Erfindung betrifft ein Verfahren und eine Vorrichtung zur kontinuierlichen, gravimetrischen Dosierung von fließfähigen Gütern für Feuerungsanlagen gemäß dem Oberbegriff des Anspruches 1 bzw. 7.

Im Stand der Technik sind zahlreiche Vorrichtung und Verfahren zur kontinuierlichen, gravimetrischen Dosierung von fließfähigen Gütern für Feuerungsanlagen bekannt. Unter fließfähigen Gütern werden sämtliche Materialien verstanden, die zur Befeuerung von Feuerungsanlagen eingesetzt werden können. Beispielhaft seien Kohlenstaub und Abfälle aller Art, insbesondere Kunststoffabfälle genannt. Die fließfähigen Güter können sowohl in Partikelform als auch in grobstückiger Form vorliegen. So können beispielsweise die Kunststoffabfälle geschreddert sein, beispielsweise Altreifen- oder Teppichschnitzel, als auch unverändert eingesetzt werden, beispielsweise in Form von Kunststoffbehältern und -verpackungen. Die fließfähigen Güter werden in der Regel in einem Silo oder Bunker gelagert und mit Hilfe von Dosier- und Transportvorrichtungen der Feuerungsanlage z. B. einem Drehrohrofen bei der Zementherstellung zugeführt.

Derartige Anlagen zum kontinuierlichen, gravimetrischen Fördern und/oder Mischen von Schüttgütern sind beispielsweise aus der DE 40 23 948 A1 bekannt, wobei bevorzugt eine Dosierrotorwaage gemäß der DE 32 17 406 A1 bzw. der EP-A-0 198 956 Verwendung findet, da mit dieser Dosiervorrichtung in einem geschlossenem pneumatischen Förderweg sich der darin befindliche Schüttgutmassenstrom kontinuierlich feststellen lässt und der Schüttgutdurchsatz durch Variieren der zugeführten Luftmenge pro Zeiteinheit oder Drehzahländerung beeinflusst werden kann. Zur entsprechenden Regelung des gewünschten Mischungsverhältnisses oder der gewünschten Fördermenge pro Zeiteinheit (Förderstärke) wird hierbei ein rechnergesteuertes, zentrales Dosiersteuersystem verwendet, wie es beispielsweise in der DE 32 17 406 A1 beschrieben ist, wobei das Wägesignal der Bunker-Wägezellen als Eingangssignal dient und insbesondere die Drehzahl des Dosierrotors für die Schüttgutzufuhr geregelt wird.

Weiterhin ist eine derartige Vorrichtung aus der DE 44 43 053 bekannt. Die darin beschriebene Vorrichtung zur kontinuierlichen, gravimetrischen Dosierung und Massenstrombestimmung von fließfähigen Gütern weist ein Durchflussmessgerät, insbesondere ein Coriolis-Messrad zur Feststellung des momentanen Massenstroms, und eine dem Durchflussmessgerät nachgeschaltete Dosiereinrichtung auf. Das Durchflussmessgerät ist mit der Dosiereinrichtung über eine Dosiersteuerung verbunden und der Austrag der Dosiereinrichtung ist in Abhängigkeit von Massenstrom-Abweichungen am Durchflussmessgerät zeitversetzt regelbar.

Für die Zufuhr von fließfähigen Gütern zu Feuerungsanlagen, insbesondere dann, wenn unterschiedliche Arten an fließfähigen Gütern zugeführt werden sollen, wird es aufgrund von Umweltschutzerwägungen und Ökonomieerwägungen immer wichtiger, die Zufuhr so zu regeln, dass der Verbrennungsprozess optimal ablaufen kann. Dies bedeutet, dass die Zufuhr an fließfähigen Gütern als Brennstoff und die Luftzufuhr so gesteuert werden soll, dass die Brennprozesse optimal ablaufen können und gleichzeitig die erwünschte Temperatur konstant gehalten werden kann. Bei unterschiedlichen Brennmaterialien stellt sich das Problem, dass der Brennwert der einzelnen Güter bzw. der fließfähigen Güter in der Gesamtheit bis jetzt nicht feststellbar ist. Aus diesen Gründen wird zum einen derzeit nur ein Teil der normalerweise eingesetzten Brennmaterialien, beispielsweise Kohlestaub für Drehrohröfen zur Zementherstellung, durch alternative Brennstoffe, beispielsweise Kunststoffabfälle, ersetzt. Weiterhin wird oft versucht, lediglich eine einzige Kunststoffsorte zuzusetzen, da die Brennwerte der einzelnen Kunststoffsorten unterschiedlich hoch sind. So weist "sortenreiner" Kunststoff einen Brennwert auf, der in der Größenordnung von Erdöl liegt, während Mischkunststofffraktionen, wie sie gerade in der Abfallwirtschaft anfallen, einen Brennwert haben, der ungefähr bei Holz und Kohle liegt.

Aufgabe der vorliegenden Erfindung ist es daher, ein Verfahren und eine Vorrichtung zur kontinuierlichen, gravimetrischen Dosierung von fließfähigen Gütern für Feuerungsanlagen bereitzustellen, mit dem bzw. mit der eine Dosierung der fließfähigen Güter in Abhängigkeit von der Beschaffenheit und dem Brennwert der jeweiligen Güter durchgeführt werden kann.

Diese Aufgabe wird gelöst durch ein Verfahren nach Anspruch 1 und eine Vorrichtung nach Anspruch 7. Bevorzugte Ausführungsformen sind Gegenstand der Unteransprüche.

Bei dem erfindungsgemäßen Verfahren wird mit Hilfe eines Durchflussmessgerätes bzw. in Kombination mit einer Dosiereinrichtung, beispielsweise einer Dosier-Bandwaage oder einem Coriolis-Messrad, der momentane Massenstrom festgestellt. Es wird somit kontinuierlich die Masse der vorbeiströmenden, fließfähigen Güter bestimmt. Neben der Massenbestimmung folgt jedoch auch eine Bestimmung, welche Art an fließfähigen Gütern vorbeiströmt. Es wird somit festgestellt, ob Kohlestaub, Kunststoffe, Teppichreste, Altreifen, Holz oder andere, brennbare Güter zur Einspeisung in den Feuerungsofen vorgesehen sind. Es wird weiterhin die Art der Kunststoffe bestimmt, beispielsweise ob Polyethylenterephthalat (PET), Polypropylen (PP), Polyvinylchlorid (PVC) oder beispielsweise kunststoffbeschichtete Materialien enthalten sind. Insbesondere soll damit die jeweilige Art von Recyclingkunststoffen festgestellt werden. Da für jedes der bekannten, fließfähigen Güter der Brennwert bekannt ist, wird aus den Daten der Massenstrombestimmung und aus den Daten der Bestimmung der Art des fließfähigen Gutes und dessen bekanntem, individuellem Brennwert der momentane Brennwert der fließfähigen Güter bestimmt. Als momentaner Brennwert wird der Brennwert der fließfähigen Güter bezeichnet, die momentan (im Zeitpunkt der Vornahme der Bestimmungen von Masse und Art) der Feuerungsanlage zugeführt werden. Der Austrag der Dosiereinrichtung wird dann in Anpassung an die Sollförderstärke in Abhängigkeit von dem momentanen Brennwert geregelt. Eine derartige Regelung erfolgt beispielsweise dadurch, dass der Feuerungsanlage mehr oder weniger Brennmaterial zugeführt wird bzw. indem eine Regelung der Luftzufuhr erfolgt. Durch das erfindungsgemäße Verfahren und die entsprechende, erfindungsgemäße Vorrichtung, mit der das erfindungsgemäße Verfahren durchgeführt werden kann, ergibt sich nun vorteilhafterweise, dass damit der Brennwert jeder einzelnen Fraktion an fließfähigen Gütern vor der Zufuhr in die Feuerungsanlage bekannt wird und eine exakte Regulierung der Dosierung erfolgen kann. Es brauchen nun keine Schätzungen bezüglich des möglichen Brennwertes mehr angestellt zu werden, sondern es liegen exakte Daten hierfür vor. Dadurch lässt sich der Brennprozess optimieren und Ökologie- und Ökonomieaspekte werden optimal berücksichtigt.

Nachfolgend wird die Erfindung anhand der Zeichnungen näher erläutert und beschrieben. Es zeigen:
Fig. 1 ein Blockschaltbild einer erfindungsgemäßen Vorrichtung;
Fig. 2 eine schematische Darstellung eines Ausführungsbeispiels der Erfindung; und
Fig. 3 eine weitere bevorzugte Ausführung in Form einer Dosier-Rotorwaage.

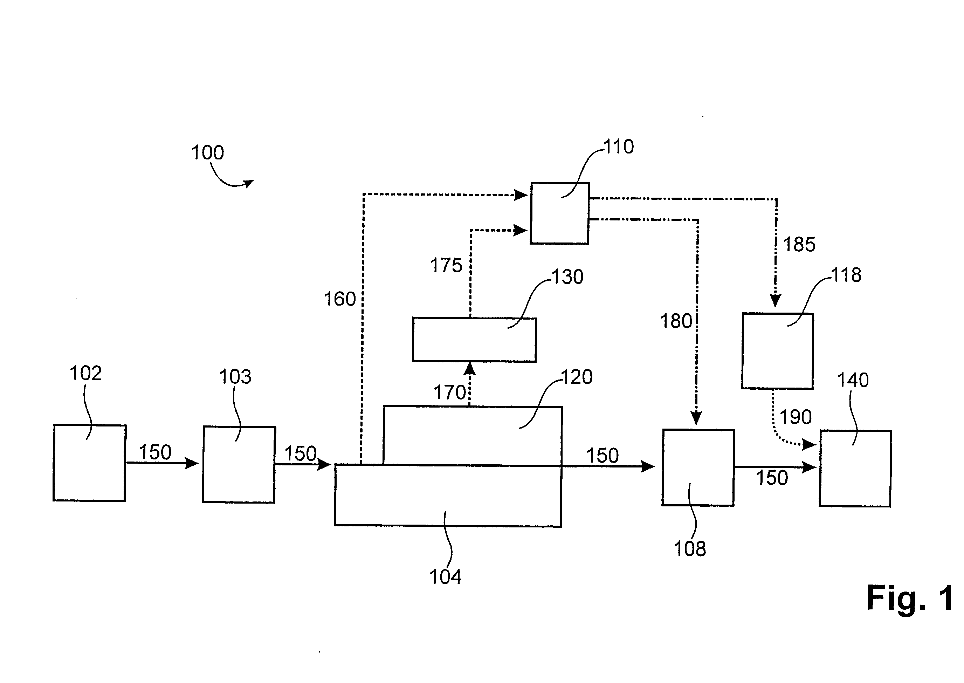

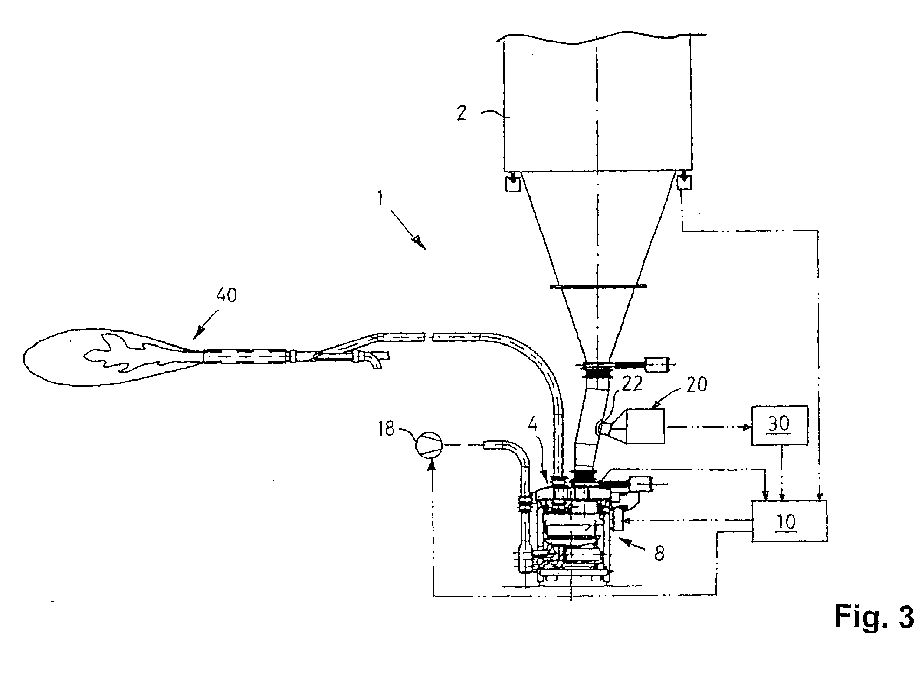

In Fig. 1 ist eine Ausführung der Erfindung schematisch dargestellt. Gezeigt ist die schematische Anordnung einer Vorrichtung 100 und die entsprechenden Signal- bzw. Materialflüsse. Aus einem Silo 102 werden mit Hilfe einer Abzugsvorrichtung 103 fließfähige Güter sowohl dem Durchflussmessgerät 104 als auch dem Stofferkennungssystem 120 zugeführt. Der Fluss der Brennmaterialien ist in Fig. 1 mit einem durchgezogenen Pfeil 150 dargestellt. Nach der Durchquerung des Durchflussmessgerätes 104 fließen diese Güter weiter über eine Dosiereinrichtung 108 zur Feuerungsanlage 140. Als Abzugsvorrichtung 103 können sämtliche, bekannte Vorrichtungen eingesetzt sein, beispielsweise Zellenradschleusen oder Dosierschnecken. Als Durchflussmessgerät können ebenfalls eine Vielzahl an bekannten Durchflussmessgeräten eingesetzt werden, wobei im Ausführungsbeispiel der Fig. 1 vorzugsweise eine Bandwaage als Durchflussmessgerät 104 vorgesehen ist. Als Dosiereinrichtung 108 können ebenfalls unterschiedliche Vorrichtungen eingesetzt werden, beispielsweise Zellenradschleusen oder Dosierschnecken oder wie in Fig. 3 eine Dosier-Rotorwaage als Kombination oder Baueinheit aus beiden. Als Feuerungsanlage 140 wird vorzugsweise ein Drehrohrofen eingesetzt, wie er beispielsweise für die Zementherstellung verwendet wird. Als Feuerungsanlagen können jedoch auch andere Feuerungsanlagen angesehen werden, beispielsweise Feuerungsanlagen in Kraftwerken. Die fließfähigen Brenngüter fließen nicht nur durch das Durchflussmessgerät 104, sondern auch durch das Stofferkennungssystem 120. Im Ausführungsbeispiel der Fig. 1 ist das Stofferkennungssystem in bzw. über dem Durchflussmessgerät 104 angeordnet. Das Stofferkennungssystem 120 kann jedoch genauso gut unmittelbar vor der Dosiereinrichtung oder unmittelbar nach dem Durchflussmessgerät 104 angeordnet sein.

Das Stofferkennungssystem 120 weist einen kontaktlosen Materialsensor auf, insbesondere einen Mikrowellensensor, Röntgensensor oder NIR-spektroskopischen Sensor. Weiterhin weist das Stofferkennungssystem 120 eine Strahlenquelle auf, mit der das durchfließende, fließfähige Gut mit einer Strahlung bestrahlbar ist, für die der Materialsensor empfindlich ist. Besonders bevorzugt wird ein NIR-spektroskopischer Sensor eingesetzt. Mit Hilfe des Stofferkennungssystems 120 wird somit jedes der vorbeifließenden Güter erkannt. Die im Stofferkennungssystem ermittelten Daten werden in die Recheneinheit 130 weitergeleitet (Pfeil 170). Dort erfolgt eine Auswertung der Daten, wobei die Art der ermittelten, fließfähigen Güter mit dem jeweiligen Brennwert verknüpft wird. Die in der Recheneinheit verknüpften Daten werden dann an die Dosiersteuerung 110 weitergeleitet (Pfeil 175). In die Dosiersteuerung 110 gehen überdies auch die vom Durchflussmessgerät 104 ermittelten Daten der Bestimmung des Massenstroms ein (Pfeil 160).

Wie aus Fig. 1 ersichtlich, sind in die Dosiersteuerung 110 eingehende Parameter mit strichlierten Pfeilen dargestellt. Die Dosiersteuerung 110 wertet die eingehenden Daten aus und bestimmt den momentanen Brennwert der fließfähigen Güter. In Abhängigkeit vom momentanen Brennwert wird daher der Austrag der Dosiereinrichtung 108 in Anpassung an die Soll-Förderstärke geregelt. Dies ist durch den strichpunktierten Pfeil 180 dargestellt. Eine weitere Regelungsmöglichkeit besteht in der Regelung der Luftzufuhr zur Feuerungsanlage 140, was mit Hilfe der Steuerung eines Gebläses 118 geschieht (Pfeil 185). Von der Dosiersteuerung ausgehende Signale sind strichpunktiert dargestellt. Das Gebläse 118 reguliert die Luftzufuhr zur Feuerungsanlage 140, dargestellt durch den Pfeil 190. Somit kann die Verbrennung der fließfähigen Güter in der Feuerungsanlage 140 sowohl über eine Regelung der Dosiereinrichtung 108, so dass mehr oder weniger fließfähige Brenngüter gefördert werden, als auch über eine Regelung des Gebläses 118, wodurch die Luftzufuhr erhöht oder gedrosselt wird, erfolgen.

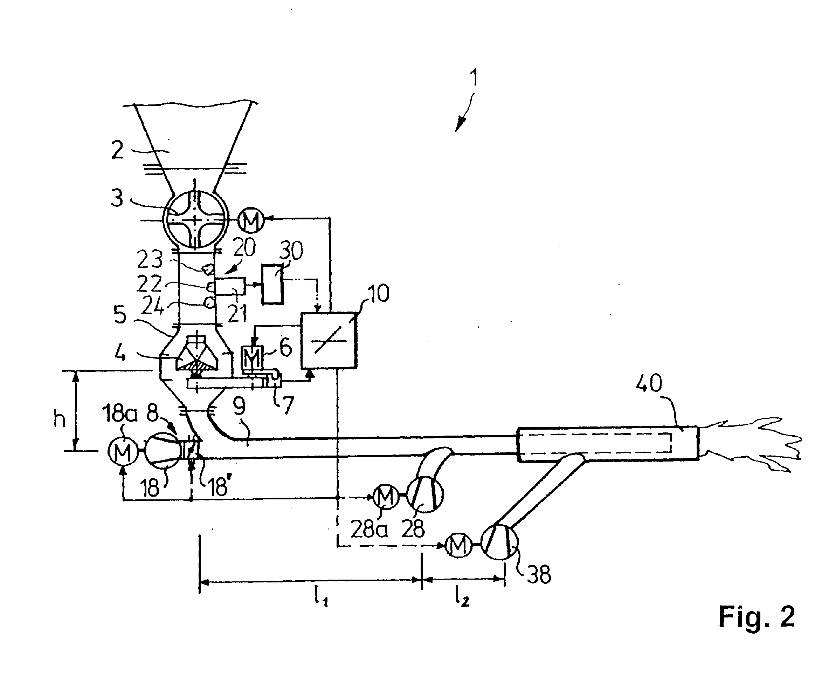

In Fig. 2 ist eine Vorrichtung 1 zur kontinuierlichen gravimetrischen Dosierung und Massenstrombestimmung dargestellt, wobei das entsprechend einer einstellbaren Soll-Förderstärke zu dosierende Fördergut, insbesondere ein rieselfähiges Schüttgut, aus einem Bunker oder Silo 2 mittels einer hier als Zellenradschleuse ausgebildeten Abzugsvorrichtung 3 zugeführt wird. Das Fördergut gelangt hierbei auf ein Durchflussmessgerät 4, das innerhalb eines Gehäuses 5 angeordnet ist und damit eine Messstrecke definiert. Das Durchflussmessgerät 4 ist hierbei als Coriolis-Messrad ausgebildet, wie dies näher in der DE 41 34 319 A1 beschrieben ist. Dieses Coriolis-Messrad ist hierbei an einem seitlich aus dem Gehäuse 5 herausgeführten Antriebsgehäuse gelagert und durch einen Elektromotor 6 angetrieben, der sich begrenzt schwenkbeweglich über einen Kragarm auf eine Kraftmesszelle 7 abstützt. Das erforderliche Drehmoment des sich mit etwa konstanter Drehzahl drehenden Messrades ändert sich hierbei entsprechend der auftretenden Corioliskraft, wobei die Änderung der Antriebsdrehmomentes und damit das Reaktionsmoment auf die seitlich angeordnete Kraftmesszelle 7 direkt proportional zu der Masse des durchströmenden Materialstromes ist.

Zur Erfassung der Drehmomentänderung und damit der Massenstrombestimmung kann jedoch auch die Leistungsaufnahme des Antriebsmotors 6 herangezogen werden. Das Durchflussmessgerät 4 gemäß dem Coriolis-Messprinzip hat hierbei den Vorteil einer sehr hohen Messgenauigkeit. Es können jedoch auch andere Durchflussmessgeräte wie Prallplatten-Durchlaufwaagen oder induktive bzw. kapazitive Durchflussmessgeräte Verwendung finden.

Als Dosiereinrichtung 8 ist hier ein Fördergebläse 18 zur Dosierung und Weiterförderung der fließfähigen Güter vorgesehen. Diese mündet in die Ausblasleitung 9. Hierbei ist der Messwertaufnehmer des Durchflussmessgerätes 4, also hier die Kraftmesszelle 7 mit der Dosiersteuerung 10 verbunden, die somit den momentanen Massenstrom feststellt und in Beziehung zur Soll-Förderstärke setzt, sowie in direkter Folge den Motor 18a der Dosiereinrichtung 8 ansteuert, um die Drehzahl des Fördergebläses 18 zu variieren und damit die eingestellte Förderstärke konstant zu halten. Wird somit von dem Durchflussmessgerät 4 eine Minusabweichung des Massenstroms gemessen, so wird zur Konstanterhaltung der Förderstärke die Drehzahl des Fördergebläses 18 um den entsprechenden Wert angehoben. Von Bedeutung ist hierbei auch, dass durch die Anordnung der Dosiereinrichtung 8 in einem bestimmten Abstand von dem Durchflussmessgerät 4 bzw. der Feuerungsanlage 40 geometrisch vorgegebene Bedingungen vorhanden sind, so dass von der Dosiersteuerung 10 genau berechnet werden kann, zu welchem Zeitpunkt die Störgröße an der Ausblasleitung 9 auftritt. Dies kann auch mit dem vom Stofferkennungssystem 120 ermittelten, momentanen Brennwert in Beziehung gesetzt werden. Somit kann die Dosiersteuerung 10 zu diesem Zeitpunkt den entsprechenden Befehl bzw. unter Berücksichtigung des Trägheitsverhaltens der Dosiereinrichtung 8 kurz vorher geben, die Drehzahl um z. B. 0,2 % zu erhöhen. Somit ist durch diese Vorrichtung 1 eine Art vorausschauende Regelung der Ist-Förderstärke möglich.

In vorteilhafter Ausgestaltung kann hierbei zur weitgehenden Konstanthaltung des dem Durchflussmessgerät 4 zugeführten Massenstroms auch die Abzugsvorrichtung 3 gemäß den Messergebnissen des Durchflussmessgerätes 4 gesteuert oder geregelt werden. In besonders einfacher Ausführung genügt es, einen Antrieb von dem Antriebsmotor 18a und einem zugeordneten Getriebe der Dosiereinrichtung 8 abzuzweigen, um eine synchrone Regelung von Abzugsvorrichtung 3 und Dosiereinrichtung 8 zu erreichen. Ebenso können natürlich getrennte Motoren vorgesehen sein, die von der Dosiersteuerung 10 in elektronisch gekoppelter Weise angesteuert werden.

Erfindungsgemäß weist die Vorrichtung 1 ein Stofferkennungssystem 20 (ähnlich dem in Fig. 4 mit Bezugsziffer 120) auf, das hier jedoch vor dem Durchflussmessgerät 4 angeordnet ist. Das Stofferkennungssystem 20 weist im Ausführungsbeispiel der Fig. 2 ein NIR-Spektrometer 21 auf. Ein Materialsensor 22, genauer ein NIR-spektroskopischer Sensor nimmt die Lichtabsorption der vorbeiströmenden, fließfähigen Güter auf. Die vorbeiströmenden, fließfähigen Güter werden homogen mit NIR-Licht beleuchtet, wofür die Strahlenquellen 23 und 24 vorgesehen sind. Als eine solche Strahlenquelle kann beispielsweise eine Halogenlampe dienen. Der Materialsensor 22 ist berührungslos und sammelt, unabhängig vom Abstand zu den fließfähigen Gütern, das transmittierte und reflektierte Licht ein und führt dies über geeignete Lichtquellenleiter zum Spektrometer 21 weiter. Da die unterschiedlichen Arten an fließfähigen Gütern jeweils eine charakteristische Lichtabsorption aufweisen, können somit diese erkannt werden. Der Nahinfrarotbereich erstreckt sich im Spektralbereich von 850 bis 2200 nm. In diesem Wellenlängenbereich zeigen z.B. die O-H-, N-H- oder C-H-Molekülschwingungen deutliche Absorptionsbanden. Durch Auswertung der Extinktion der einzelnen Banden sind folglich exakte Aussagen zur Zusammensetzung auch komplexer Mischungen möglich. Dies kann direkt vor Ort während der Zufuhr der fließfähigen Güter zur Feuerungsanlage 40 erfolgen und liefert die Ergebnisse in Echtzeit. Die Daten werden vom Spektrometer 21 in die Recheneinheit 30 weitergeleitet, wo sie mit den aus Kalibrierungsverfahren oder bekannten Quellen vorhandenen Daten von BrennMaterialien verglichen werden und den jeweils dazu bekannten Brennwerten zugeordnet werden. Diese Daten wiederum werden der Dosiersteuerung 10 zugeführt, die mit Hilfe der im Durchflussmessgerät 4 gewonnenen Daten die Förderstärke in Anpassung an die Soll-Förderstärke regelt unter Berücksichtigung des momentanen Brennwertes der dem System zugeführten Brennstoffe. Es kann somit eine Regelung der Dosiereinrichtung und auch der Abzugsvorrichtung erfolgen.

Eine weitere Möglichkeit zur Regelung besteht darin, dass am Fördergebläse 18 eine Dosierklappe 18' vorgesehen ist, die den Luftstrom verändert und somit die Austragsleistung aus dem Gehäuse 5 in Abhängigkeit von dem durch das Durchflussmessgerät 4 festgestellten momentanen Massenstrom und Brennwert steuert. Je nach Plus- oder Minusabweichung kann somit die Lufteinblasung durch das Fördergebläse 18 in Folge der Drehzahlregulierung des Antriebsmotors 18a und/oder Klappenöffnung oder Schließung der Dosierklappe 18' variiert werden, um die Soll-Förderstärke einzuhalten.

Eine weitere Möglichkeit besteht darin, dass ein Zusatzgebläse 28 an der Ausblasleitung 9 angeschlossen ist, wobei wiederum der Antriebsmotor 28a des Zusatzgebläses 28 an die Dosiersteuerung 10 angeschlossen ist, wie dies von einem Datenverknüpfungspunkt ausgehend in Strichlinien dargestellt ist. Anstatt der Veränderung von Sekundärluftmenge und/oder Luftgeschwindigkeit kann als weitere Alternative ein Primärluftgebläse 38 nachgeregelt werden, wobei wiederum feste Abstände, nämlich hier h + I1 + I2, und damit Zeitunterschiede zwischen Durchlaufmessgerät 4 und Einmündung in die Feuerungsanlage 40 vorgegeben sind. Die Änderung der Primärluftzufuhr ist hierbei insbesondere bei Feuerungsanlagen 40 zur Konstanthaltung des Luft-/Brenn-stoffverhältnisses wesentlich. So sind auch bevorzugt die drei dargestellten Gebläse 18, 28 und 38 untereinander in einem z. B. in der Dosiersteuerung 10 integrierten Regler gekoppelt, so dass bei einer Erhöhung der Luftmenge bei dem Gebläse 18 eine entsprechende Reduzierung der zugeführten Luftmenge an dem Gebläse 38 vorgenommen wird, um somit nicht nur die zugeführte Brennstoffmenge, sondern auch das bevorzugt stöchiometrische Luft-/Brennstoffverhältnis entsprechend den Sollwerten einzuhalten.

In Fig. 3 ist (mit gleichen Bezugszeichen für entsprechende Bauelemente) eine bevorzugte Ausführung der Vorrichtung dargestellt, nämlich mit einer Dosier-Rotorwaage der eingangs genannten Bauweise. Diese Bauart der Dosier-Rotorwaage als Dosiereinrichtung 8 integriert aufgrund ihrer Bauweise zugleich das Durchflussmessgerät 4, wie dies durch die doppelte Pfeilbezeichnung angedeutet ist. Hierdurch ergibt sich eine besonders kompakte Bauweise der Vorrichtung in einer Baueinheit, so dass die in Fig. 1 und 2 dargestellten Einzelkomponenten praktisch in einem Dosiergerät kombiniert sind. Das hier wesentliche Stofferkennungssysteme 20 kann kurz vor dem Materialeintritt aus dem Bunker 2 angeordnet sein, aber auch in das Gehäuse der Dosier-Rotorwaage 4 und 8 integriert sein. Entsprechendes gilt für ähnliche Dosiergeräte der Anmelderin, z. B. Dosier-Kettenwaagen.

## Patentansprüche

1. Verfahren zur kontinuierlichen, gravimetrischen Dosierung von fließfähigen Gütern für Feuerungsanlagen, wobei der momentane Massenstrom festgestellt wird und die Dosierung mit einer Dosiereinrichtung (8,108) erfolgt,
**dadurch gekennzeichnet, dass**
die Art jedes fließfähigen Gutes festgestellt wird, aus der Art jedes fließfähigen Gutes, dessen bekanntem, individuellem Brennwert und der Massenstrombestimmung der momentane Brennwert der fließfähigen Güter bestimmt wird und der Austrag der Dosiereinrichtung (8, 108) in Anpassung an die Soll-Förderstärke in Abhängigkeit von dem momentanen Brennwert geregelt wird.

2. Verfahren nach Anspruch 1, **dadurch gekennzeichnet, dass**
das Bestimmen der Art des fließfähigen Gutes mit NIR-Spektroskopie erfolgt.

3. Verfahren nach Anspruch 1 oder 2, **dadurch gekennzeichnet, dass**
die fließfähigen Güter Kunststoffe, insbesondere Recyclingkunststoffe, sind.

4. Verfahren nach einem der vorangegangenen Ansprüche, **dadurch gekennzeichnet, dass**
der Austrag der Dosiereinrichtung (8, 108) unter Berücksichtigung des Abstandes zwischen Dosiereinrichtung (8, 108) und der Feuerungsanlage (40) geregelt wird.

5. Verfahren nach einem der vorangegangenen Ansprüche, **dadurch gekennzeichnet, dass**
der Austrag der Dosiereinrichtung (8, 108) durch Änderung der Drehzahl der Dosiereinrichtung (8, 108) gesteuert bzw, geregelt wird.

6. Verfahren nach einem der vorangegangenen Ansprüche, **dadurch gekennzeichnet, dass**
der Austrag der Dosiereinrichtung (8) bei pneumatischer Förderung durch Veränderung der Luftmenge und/oder Luftgeschwindigkeit geregelt wird.

7. Vorrichtung zur kontinuierlichen, gravimetrischen Dosierung von fließfähigen Gütern für Feuerungsanlagen, wobei der momentane Massenstrom festgestellt wird und mittels einer Dosiereinrichtung (8, 108) die fließfähigen Güter dosiert werden
**dadurch gekennzeichnet, dass**
ein Stofferkennungssystem (20, 120) zum Feststellen der Art jedes fließfähigen Gutes, eine Recheneinheit (30, 130) zur Bestimmung des momentanen Brennwertes der fließfähigen Güter und eine Dosiersteuerung (10, 110), mit der der Austrag der Dosiereinrichtung (8, 108) an die Soll-Förderstärke in Abhängigkeit von dem momentanen Brennwert angepasst wird, vorgesehen sind.

8. Vorrichtung nach Anspruch 7, **dadurch gekennzeichnet, dass**
das Stofferkennungssystem (20, 120) einen kontaktlosen Materialsensor (22), insbesondere einen Mikrowellensensor, einen Röntgensensor oder NIR-spektroskopischen Sensor, und eine Strahlenquelle (23, 24), mit der das fließfähige Gut mit einer Strahlung bestrahlbar ist, für die der Materialsensor empfindlich ist, aufweist.

9. Vorrichtung nach Anspruch 8, **dadurch gekennzeichnet, dass**
der Materialsensor (22) ein NIR-spektroskopischer Sensor ist und die Strahlenquelle (23, 24) Licht im nahinfraroten Bereich aussendet, insbesondere dass die Strahlenquelle eine Halogenlampe ist.

10. Vorrichtung nach einem der Ansprüche 7 bis 9, **dadurch gekennzeichnet, dass**
das Stofferkennungssystem (20) unmittelbar vor der Dosiereinrichtung (8, 108) angeordnet ist.

11. Vorrichtung nach einem der Ansprüche 7 bis 9, **dadurch gekennzeichnet, dass**
das Stofferkennungssystem (120) in einem Durchflussmessgerät (104) angeordnet ist.

12. Vorrichtung nach Anspruch 11, **dadurch gekennzeichnet, dass**
das Durchflussmessgerät (104) an einer Bandwaage oder einem Coriolis-DurchlaufMessgerät angeordnet oder als Dosier-Rotorwaage (8) ausgebildet ist.

13. Vorrichtung nach einem der Ansprüche 7 bis 12, **dadurch gekennzeichnet, dass**
die fließfähigen Güter Kunststoffe, insbesondere Recyclingkunststoffe, sind.

14. Vorrichtung nach einem der Ansprüche 7 bis 13, **dadurch gekennzeichnet, dass** die Feuerungsanlage (40, 140) ein Drehrohrofen zur Zementherstellung ist.

15. Vorrichtung nach einem der Ansprüche 11 oder 12, **dadurch gekennzeichnet, dass** die Dosiereinrichtung (8) und das Durchflussmessgerät (104) eine Einheit bilden, insbesondere eine Dosier-Rotorwaage.

## Claims

1. A method for the continuous gravimetric metering of flowing materials for burner systems, with the instantaneous mass flow being determined and the metering occurring with a metering device (8, 108),
**characterized in that**
the type of each flowing material is determined, the known individual calorific value from the type of each flowing material is determined and the instantaneous calorific value of the flowing materials is determined from the determination of the mass flow and the output from the metering device (8, 108) is regulated in adjustment to the set-point conveying rate depending on the instantaneous calorific value.

2. A method according to claim 1, **characterized in that** the determination of type of flowing material is carried out by way of NIR spectroscopy.

3. A method according to claim 1 or 2, **characterized in that** the flowing materials are plastic materials, especially plastic from recycling.

4. A method according to one of the preceding claims, **characterized in that** the output of the metering device (8, 108) is regulated by taking into account the distance between metering device (8, 108) and burner system (40).

5. A method according to one of the preceding claims, **characterized in that** the output of the metering device (8, 108) is controlled or regulated by changing the speed of the metering device (8, 108).

6. A method according to one of the preceding claims, **characterized in that** the output of the metering device (8) is regulated in the case of pneumatic conveyance by changing the air quantity and/or air speed.

7. An apparatus for the continuous gravimetric metering of flowing materials for burner systems, with the instantaneous mass flow being determined and with the flowing materials being metered by means of a metering device (8, 108),
**characterized in that**
there are provided a material recognition system (20, 120) for determining any kind of flowing material, a computer unit (30, 130) for determining the instantaneous calorific value of the flowing materials, and a metering control unit (10, 110) with which the output of the metering device (8, 108) is adjusted to the set-point conveying rate depending on the instantaneous calorific value.

8. An apparatus according to claim 7, **characterized in that** the material recognition system (20, 120) comprises a contactless material sensor (22), especially a microwave sensor, an X-ray sensor or NIR spectroscopic sensor, and a radiation source (23, 24) with which the flowing material can be irradiated with a radiation to which the material sensor is sensitive.

9. An apparatus according to claim 8, **characterized in that** the material sensor (22) is an NIR spectroscopic sensor and the radiation source (23, 24) emits light in the near-infrared range, especially that the radiation source is a halogen lamp.

10. An apparatus according to one of the claims 7 to 9, **characterized in that** the material recognition system (20) is arranged directly before the metering device (8, 108).

11. An apparatus according to one of the claims 7 to 9, **characterized in that** the material recognition system (120) is arranged in a flow meter (104).

12. An apparatus according to claim 11, **characterized in that** the flow meter (104) is arranged on a band weigher or a Coriolis flow meter or is configured as a rotary metering weigher (8).

13. An apparatus according to one of the claims 7 to 12, **characterized in that** the flowing materials are plastic materials, especially plastic from recycling.

14. An apparatus according to one of the claims 7 to 13, **characterized in that** the burner system (40, 140) is a rotary kiln for cement production.

15. An apparatus according to one of the claims 11 or 12, **characterized in that** the metering device (8) and the flow meter (104) form a unit, especially a rotary metering weigher.

## Revendications

1. Procédé de dosage gravimétrique en continu de matières fluides pour des installations de chauffage, selon lequel on détermine le flux massique momentané et on effectue le dosage avec un dispositif de dosage (8, 108),
**caractérisé par le fait**
**que** l'on détermine la nature de chaque matière fluide, l'on détermine le pouvoir calorifique momentané des matières fluides à partir de la nature de chaque matière fluide, de son pouvoir calorifique individuel connu et de la détermination du flux massique, et l'on régule la sortie du dispositif de dosage (8, 108) de manière à l'adapter au débit de transport de consigne en fonction du pouvoir calorifique momentané.

2. Procédé selon la revendication 1, **caractérisé par le fait**
**que** l'on détermine la nature de la matière fluide par spectroscopie NIR.

3. Procédé selon la revendication 1 ou 2, **caractérisé par le fait**
**que** les matières fluides sont des matières plastiques, en particulier des matières plastique de recyclage.

4. Procédé selon l'une des revendications précédentes, **caractérisé par le fait**
**que** la sortie du dispositif de dosage (8, 108) est régulée en tenant compte de la distance entre le dispositif de dosage (8, 108) et l'installation de chauffage (40).

5. Procédé selon l'une des revendications précédentes, **caractérisé par le fait**
**que** la sortie du dispositif de dosage (8, 108) est commandée et/ou régulée par modification de la vitesse de rotation du dispositif de dosage (8, 108).

6. Procédé selon l'une des revendications précédentes, **caractérisé par le fait**
**que** la sortie du dispositif de dosage (8, 108) est régulée, en cas de transport pneumatique, par modification de la quantité d'air et/ou de la vitesse de l'air.

7. Dispositif de dosage gravimétrique en continu de matières fluides pour des installations de chauffage, dans lequel on détermine le flux massique momentané et on dose les matières fluides au moyen d'un dispositif de dosage (8, 108),
**caractérisé par le fait**
**qu'**il est prévu un système de reconnaissance de matière (20, 120) pour déterminer la nature de chaque matière fluide, une unité de calcul (30, 130) pour déterminer le pouvoir calorifique momentané des matières fluides et une commande de dosage (10, 110) avec laquelle la sortie du dispositif de dosage (8, 108) est adaptée au débit de transport de consigne en fonction du pouvoir calorifique momentané.

8. Dispositif selon la revendication 7, **caractérisé par le fait**
**que** le système de reconnaissance de matière (20, 120) présente un capteur de matériau sans contact (22), en particulier un capteur à micro-ondes, un capteur à rayons X ou un capteur spectroscopique NIR, et une source de rayonnement (23, 24) avec laquelle on peut exposer la matière fluide à un rayonnement auquel le capteur de matériau est sensible.

9. Dispositif selon la revendication 8, **caractérisé par le fait**
**que** le capteur de matériau (22) est un capteur spectroscopique NIR et la source de rayonnement (23, 24) émet de la lumière dans le domaine infrarouge proche, en particulier que la source de rayonnement est une lampe halogène.

10. Dispositif selon l'une des revendications 7 à 9, **caractérisé par le fait**
**que** le système de reconnaissance de matière (20) est disposé immédiatement avant le dispositif de dosage (8, 108).

11. Dispositif selon l'une des revendications 7 à 9, **caractérisé par le fait**
**que** le système de reconnaissance de matière (20) est disposé dans un appareil de mesure de débit (104).

12. Dispositif selon la revendication 11, **caractérisé par le fait**
**que** l'appareil de mesure de débit (104) est disposé sur un tapis peseur ou un appareil de mesure de débit à effet Coriolis ou conçu comme une bascule à rotor de dosage (8).

13. Dispositif selon l'une des revendications 7 à 12, **caractérisé par le fait**
**que** les matières fluides sont des matières plastiques, en particulier des matières plastique de recyclage.

14. Dispositif selon l'une des revendications 7 à 13, **caractérisé par le fait**
**que** l'installation de chauffage (40, 140) est un four tubulaire tournant pour la fabrication de ciment.

15. Dispositif selon l'une des revendications 11 ou 12, **caractérisé par le fait**
**que** le dispositif de dosage (8, 108) et l'appareil de mesure de débit (104) forment une unité, en particulier une bascule à rotor de dosage.
